# EUROPEAN PATENT SPECIFICATION

(11) **EP 2 410 138 B1**
(45) Date of publication and mention of the grant of the patent: **19.04.2017**
(21) Application number: 10170375.9
(22) Date of filing: 22.07.2010
(51) Int. Cl.: F02C 6/08, F01D 25/24

(54) **Gas turbine engine flange arrangement and method for retrofitting same**
Flanschanordnung eines Gasturbinentriebwerks und Verfahren zu deren Nachrüstung
Agencement de flasques du moteur de turbine à gaz et son procédé de reéquipement

(43) Date of publication of application: 25.01.2012
(73) Proprietor: General Electric Technology GmbH, 5400 Baden (CH)
(72) Inventor: Rauch, Marc, CH-8105 Regensdorf (CH); Wunderle, Helmar, D-79761 Waldshut-Tiengen (DE); Baldischweiler, Peter, 5425 Schneisingen (CH); Chin, Ai Ling, CH-5400 Baden (CH)
(74) Representative: Bernotti, Andrea

(56) References cited:
- WO-A1-00/28189
- DE-U1- 20 005 413
- FR-A1- 2 907 166
- JP-A- 2009 270 498
- US-A- 3 302 979
- US-A- 4 863 341
- US-B2- 7 596 954

## Description

### TECHNICAL FIELD

The present invention relates to a gas turbine arrangement and a method for retrofitting same.

### BACKGROUND OF THE INVENTION

Gas turbine arrangements are known to comprise a compressor, wherein air is compressed and fed into a combustion chamber. In the combustion chamber a fuel is injected to form a mixture of air and fuel that is combusted, to be then expanded in a turbine.

In addition, during operation air is extracted from the compressor for purposes different from the combustion; this is the so called secondary air, that is used for example for cooling purposes, as a purge air, and so on.

Traditionally, in order to extract air from the compressor, the compressor casing is provided with flanges defining circular passages.

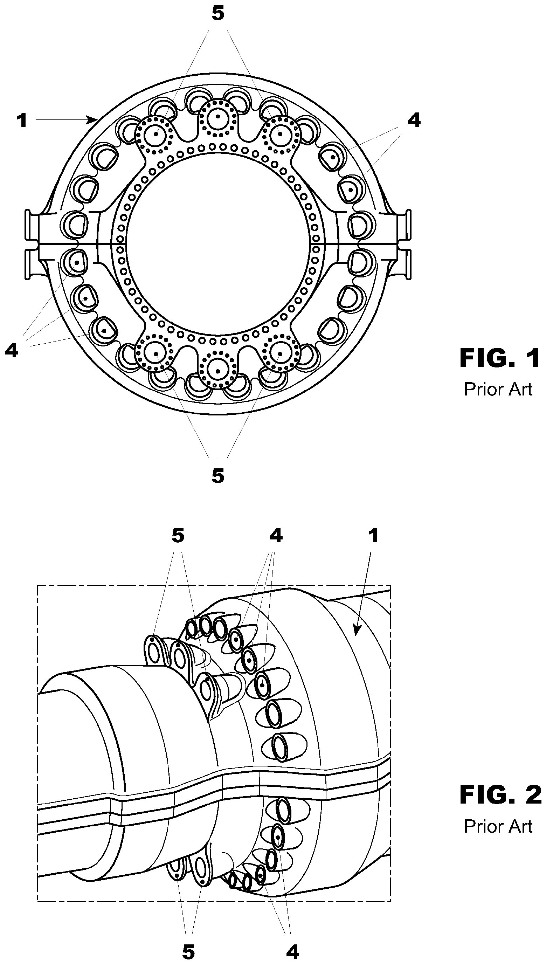

In this respect, figures 1 and 2 show respectively a front view and a perspective view of a compressor casing 1 having at its terminal portion first circular flanges 4, for connecting pipes feeding burners (not shown) connected in turn to the combustion chamber.

Additionally, the terminal portion of the compressor casing 1 also has second flanges 5, for connecting pipes (also not shown) supplying the secondary air extracted from the compressor to the combustion chamber and/or turbine (according to the design).

In order to increase the gas turbine arrangement performances (for example by increasing the flame temperature in the combustion chamber and correspondingly the temperature of the hot gases circulating in the turbine), a larger flow rate of secondary air is needed, for example to cool the airfoils or other turbine components or also those components close to the combustion chamber.

Increasing of the secondary air requires increasing the number or dimension of the second pipes. Nevertheless this approach proved to be hardly feasible, because of the strict space constrains.

This problem is particularly relevant in case of retrofitting, since no design optimization is possible to achieve the desired secondary air flow rate.

A combustor housing with two gas sampling inlets, which have the shape of long holes, arranged in manner to be diametrically opposite to one another on transversal section of casing of combustion chamber is known from the FR2907166 A1

### SUMMARY OF THE INVENTION

The technical aim of the present invention therefore includes providing a gas turbine arrangement and a method for retrofitting same addressing the aforementioned problems of the known art.

Within the scope of this technical aim, an aspect of the invention is to provide a gas turbine arrangement and a method allowing a large secondary air flow rate to be extracted from the compressor, while at the same time complying with the space constrains.

The technical aim, together with these and further aspects, are attained according to the invention by providing a gas turbine arrangement and a method in accordance with the accompanying claims.

### BRIEF DESCRIPTION OF THE DRAWINGS

Further characteristics and advantages of the invention will be more apparent from the description of a preferred but non-exclusive embodiment of the gas turbine arrangement, illustrated by way of non-limiting example in the accompanying drawings, in which:
Figures 1 and 2 show respectively a front and a perspective view of a compressor casing of a traditional gas turbine arrangement;
Figures 3 and 4 show respectively a front and a perspective view of a compressor casing of a gas turbine arrangement in an embodiment of the invention; and
Figure 5 is a sketch schematically showing a gas turbine arrangement.

### DETAILED DESCRIPTION OF EMBODIMENTS OF THE INVENTION

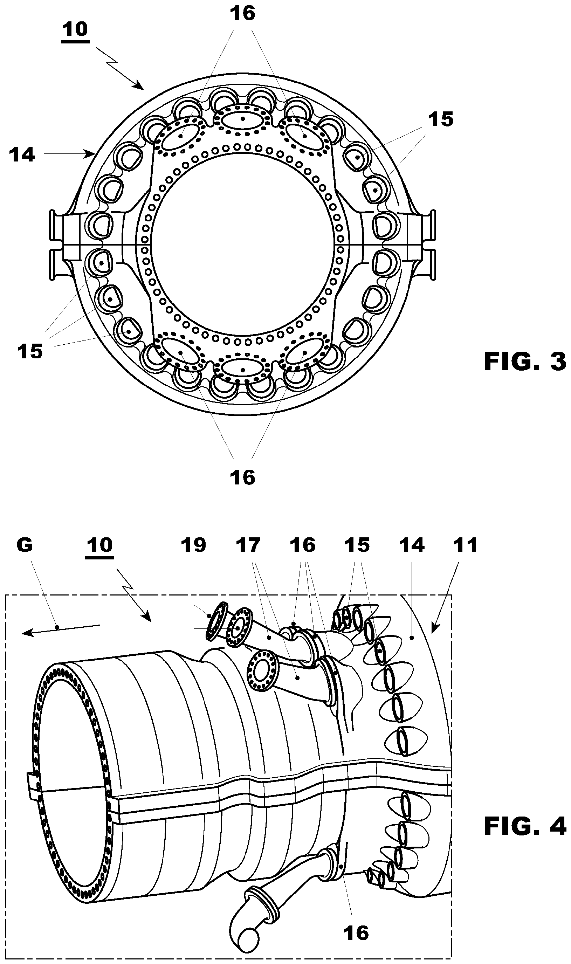

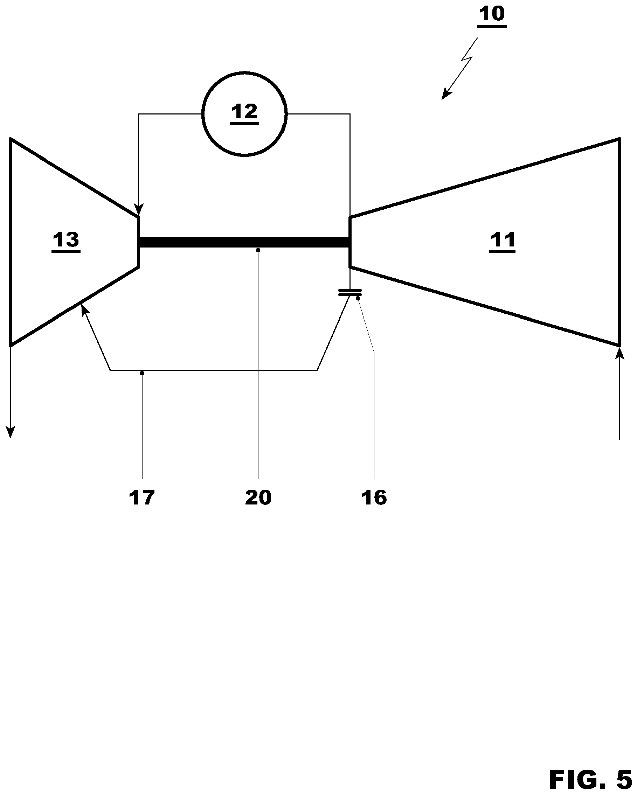

With reference to figures 3 through 5, a gas turbine arrangement 10 is shown.

The gas turbine arrangement 10 comprises a compressor 11, a combustion chamber 12 and a turbine 13 connected one another.

In particular a casing 14 housing the compressor 11 has first flanges 15 for connecting burners (not shown, eventually via intermediate pipes) that feed the combustion chamber 12.

In addition, the casing 14 has second flanges 16 connectable to pipes 17 providing secondary air to the combustion chamber 12 and/or turbine 13; figure 4 shows the pipes 17 actually connected to the flanges 16.

The flanges 16 define passages having an asymmetric cross section and, in particular, an oval cross section.

Correspondingly the pipes 17 have an asymmetrical inlet cross section, in particular an oval inlet cross section (to be connected to the flanges 16), and a symmetrical outlet cross section 19, in particular, a circular outlet cross section.

Traditional pipes (not shown) having a circular cross section over their whole length are connected between the flanges 19 and flanges (not shown) of the casing of the combustion chamber 12 or turbine 13.

As shown in the figures, the flanges 16 are located downstream of the flanges 15 (with respect of the hot gases direction indicated by arrow G) and the pipes 17 are located between the burners (not shown) and an arrangement shaft 20.

The present invention also refers to a method for retrofitting the gas turbine arrangement 10.

The method comprises replacing the flanges 5 defining passages having a symmetrical cross section with flanges 16 defining passages having an asymmetrical cross section.

Replacement may be achieved by cutting a relevant part of the casing having the flanges 5 and then connecting, for example by welding, a new part having the flanges 16. Alternatively in case the flanges 5 are included in a plate (for example an annular plate) that defines a portion of the casing and is connected to the rest of the casing by removable means such as bolts, the plate could be dismounted and replaced by another plate, having the flanges 16.

Naturally the features described may be independently provided from one another.

In practice the materials used and the dimensions can be chosen at will according to requirements and to the state of the art.

### REFERENCE NUMBERS

- 1: compressor casing
- 4: first flanges
- 5: second flanges
- 10: gas turbine arrangement
- 11: compressor
- 12: combustion chamber
- 13: turbine
- 14: casing of 11
- 15: first flanges
- 16: second flanges
- 17: pipes
- 19: outlet cross section of 17
- 20: shaft
- G: direction of the hot gases

## Claims

1. Gas turbine arrangement (10) comprising at least a compressor (11), a combustion chamber (12) and a turbine (13) connected to one another, wherein a casing (14) housing the compressor (11) has flanges (16) connectable to pipes (17) providing secondary air to the combustion chamber (12) and/or turbine (13); said flanges (16) define passages having an asymmetric cross section; said asymmetric cross section being an oval cross section; **characterised in that** said flanges (16) extend orthogonally with respect of the hot gases direction (G).

2. Method for retrofitting a gas turbine arrangement (10) comprising at least a compressor (11), a combustion chamber (12) and a turbine (13) connected to one another, wherein a casing (14) housing the compressor (11) has at least a flange (5) defining passages having a symmetrical cross section, connected to pipes (17) providing secondary air to the combustion chamber (12) and/or turbine (13), the method being **characterised by** replacing the at least a flange (5) defining passages having a symmetrical cross section with at least a flange (16) defining passages having an asymmetrical cross section.

## Patentansprüche

1. Gasturbinenarrangement (10) umfassend wenigstens einen Kompressor (11), eine Brennkammer (12) und eine Turbine (13), die miteinander verbunden sind, wobei ein Gehäuse (14), welches den Kompressor (11) aufnimmt, Flansche (16) aufweist, die mit Rohren (17) verbindbar sind, welche Sekundärluft für die Brennkammer (12) und/oder die Turbine (13) bereitstellen; besagte Flansche (16) definieren Passagen mit einem asymmetrischen Querschnitt; wobei besagter asymmetrischer Querschnitt als ovaler Querschnitt ausgebildet ist; **dadurch gekennzeichnet, dass** besagte Flansche (16) sich in Bezug auf die Heißgasrichtung (G) orthogonal erstrecken.

2. Verfahren zur Umrüstung eines Gasturbinenarrangements (10) umfassend wenigstens einen Kompressor (11), eine Brennkammer (12) und eine Turbine (13), die miteinander verbunden sind, wobei ein Gehäuse (14), welches den Kompressor (11) aufnimmt, wenigstens einen Flansch (5) aufweist, welcher Passagen definiert mit einem symmetrischen Querschnitt, mit Rohren (17) verbunden ist, welche Sekundärluft für die Brennkammer (12) und/oder Turbine (13) bereitstellen, dass das Verfahren **dadurch gekennzeichnet ist, dass** der wenigstens eine Flansch (5), welcher Passagen mit einem symmetrischen Querschnitt definiert, durch wenigstens einen Flansch (16) ersetzt wird, welcher Passagen mit einem asymmetrischen Querschnitt aufweist.

## Revendications

1. Agencement de turbine à gaz (10) comprenant au moins un compresseur (11), une chambre de combustion (12) et une turbine (13) connectés les uns aux autres, dans lequel une enveloppe (14) qui reçoit le compresseur (11) présente des flasques (16) qui peuvent être connectées à des canalisations (17) fournissant de l'air secondaire à la chambre de combustion (12) et / ou à la turbine (13) ; lesdites flasques (16) définissent des passages qui présentent une section transversale asymétrique ; ladite section transversale asymétrique étant une section transversale ovale ; **caractérisé en ce que** lesdites flasques (16) s'étendent de manière orthogonale par rapport à la direction des gaz chauds (G).

2. Procédé destiné à modifier un agencement de turbine à gaz (10) qui comprend au moins un compresseur (11), une chambre de combustion (12) et une turbine (13) connectés les uns aux autres, dans lequel l'enveloppe (14) recevant le compresseur (11) présente au moins une flasque (5) qui définit des passages présentant une section transversale symétrique, connectée à des canalisations (17) qui fournissent de l'air secondaire à la chambre de combustion (12) et / ou à la turbine (13), le procédé étant **caractérisé par** le remplacement de la ou des flasques (5) qui définissent des passages présentant une section transversale symétrique, avec une flasque (16) au moins qui définit des passages présentant une section transversale asymétrique.
